(19) Europäisches Patentamt
European Patent Office
Office européen des brevets

(11) Veröffentlichungsnummer: **0 264 733**
**B1**

(12) # EUROPÄISCHE PATENTSCHRIFT

(45) Veröffentlichungstag der Patentschrift: **21.03.90**

(51) Int. Cl.⁴: **C08F 10/00**, C08F 4/64

(21) Anmeldenummer: **87114745.0**

(22) Anmeldetag: **09.10.87**

(54) **Verfahren zum Herstellen von Homo- und Copolymerisaten des Ethylens mittels eines Ziegler-Katalysatorsystems.**

(30) Priorität: **14.10.86 DE 3634915**

(43) Veröffentlichungstag der Anmeldung: **27.04.88 Patentblatt 88/17**

(45) Bekanntmachung des Hinweises auf die Patenterteilung: **21.03.90 Patentblatt 90/12**

(84) Benannte Vertragsstaaten: **AT DE FR GB IT NL**

(56) Entgegenhaltungen:
**EP-A- 0 174 620**
**EP-A- 0 188 740**

(73) Patentinhaber: **BASF Aktiengesellschaft, Carl-Bosch-Strasse 38, D-6700 Ludwigshafen(DE)**

(72) Erfinder: **Vogt, Heinz, Dr., Pranckhstrasse 30, D-6700 Ludwigshafen(DE)**
Erfinder: **Schauss, Eckard, Dr., Dirmsteiner Strasse 114 b, D-6711 Heuchelheim(DE)**
Erfinder: **Schweier, Günther, Dr., Friedrich-Pietzsch-Strasse 14, D-6701 Friedelsheim(DE)**

**EP 0 264 733 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorliegende Erfindung liegt im Rahmen eines Verfahrens zum Herstellen von Homopolymerisaten des Ethylens sowie insbesondere Copolymerisaten des Ethylens mit untergeordneten Mengen an $C_3$- bis $C_8$-, insbesondere $C_4$- bis $C_6$-alpha-Monoolefinen durch Polymerisation ds bzw. der Monomeren bei Temperaturen von 30 bis 200, insbesondere 50 bis 100°C, und Drücken von 1 bis 200, insbesondere 5 bis 60 bar, mittels eines Ziegler-Katalysatorsystems aus

(1) einer Titan enthaltenden Katalysatorkomponente und
(2) einer Aluminium enthaltenden Katalysatorkomponente der Formel $AlR_3$,
worin steht
R für einen $C_1$- bis $C_{12}$-Kohlenwasserstoffrest, vorzugsweise eine $C_1$- bis $C_{12}$- und insbesondere eine $C_2$- bis $C_8$-Alkylgruppe,
mit den Maßgaben, daß (i) das Atomverhältnis Titan aus der Katalysatorkomponente (1) : Aluminium aus der Katalysatorkomponente (2) im Bereich von 1:5 bis 1:700, insbesondere 1:10 bis 1:500, liegt und (ii) als Titan enthaltende Katalysatorkomponente (1) eingesetzt wird das festphasige Produkt (VI), das erhalten worden ist, indem man
(1.1) zunächst
(1.1.1) einen feinteiligen, porösen, anorganisch-oxidischen Stoff (I), der einen Teilchendurchmesser von 1 bis 1,000, insbesondere 10 bis 400 µm, ein Porenvolumen von 0,3 bis 3, insbesondere 1 bis 2,5 $cm^3/g$ sowie eine Oberfläche von 100 bis 1.000, insbesondere 200 bis 400 $m^2/g$ besitzt und die Formel $SiO_2.aAl_2O_3$ - worin a steht für eine Zahl im Bereich von 0 bis 2, insbesondere 0 bis 0,5 - hat, und
(1.1.2) eine Lösung (II), wie sie sich ergibt beim Zusammenbringen von
(IIa) 100 Gew.-Teilen eines organischen Sauerstoff enthaltenden Lösungsmittels,
(IIb) 0,01 bis 6, insbesondere 0,04 bis 3,5 Gew.-Teilen (gerechnet als Titan) eines Titantrichlorids der Formel $TiCl_3.nAlCl_3$ - worin n steht für eine Zahl im Bereich von 0 bis 0,5, vorzugsweise 0,2 bis 0,4, und insbesondere 0,31 bis 0,35 -, sowie
(IIc) 0,01 bis 4, insbesondere 0,04 bis 2,5 Gew.-Teilen (gerechnet als Magnesium) Magnesiumchlorid ($MgCl_2$),
miteinander in Berührung bringt unter Bildung einer Dispersion (III), mit der Maßgabe, daß das Gewichtsverhältnis anorganisch-oxidischer Stoff (I) : Titan in dem Titantrichlorid (IIb) im Bereich von 1:0,01 bis 1:0,2 und das Gewichtsverhältnis anorganisch-oxidischer Stoff (I) : Magnesium in dem Magnesiumchlorid (IIc) im Bereich von 1:0,01 bis 1:0,25 liegt, die Dispersion (III) bei einer Temperatur, die unterhalb von 200, insbesondere unterhalb von 160°C, und oberhalb des Schmelzpunktes des verwendeten organischen, Sauerstoff enthaltenden Lösungsmittels (IIa) liegt, bis zur trockenen Konsistenz - Bildung eines festphasigen Zwischenproduktes (IV) - eindampft und
(1.2) dann
(1.2.1) das aus Stufe (1.1) erhaltene festphasige Zwischenprodukt (IV) und
(1.2.2.) eine in einem inerten Kohlenwasserstoff gelöste Aluminiumkomponente (V), die besteht
(1.2.2.1) zu 25 bis 100, vorzugsweise 35 bis 100, und insbesondere 50 bis 100 Mol.% aus einer in dem inerten Kohlenwasserstoff löslichen Komplexverbindung der Summenformel

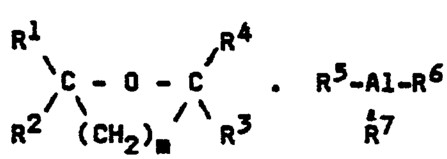

worin stehen:
m für die Zahl 2, 3, oder 4; insbesondere die Zahl 2,
$R^1$ sowie
$R^2$ sowie
$R^3$ sowie
$R^4$ für eine $C_1$- bis $C_3$-Alkylgruppe oder Wasserstoff, vorzugsweise eine Methylgruppe oder Wasserstoff, und insbesondere Wasserstoff,
$R^5$ sowie
$R^6$ für einen $C_1$- bis $C_{12}$-Kohlenwasserstoffrest, vorzugsweise eine $C_1$- bis $C_{12}$-, und insbesondere eine $C_2$- bis $C_8$-Alkylgruppe und
$R^7$ für einen $C_1$- bis $C_{12}$-Kohlenwasserstoffrest oder Chlor, vorzugsweise eine $C_1$- bis $C_{12}$-Alkylgruppe oder Chlor, und insbesondere eine $C_2$- bis $C_8$-Alkylgruppe oder Chlor,
sowie
(1.2.2.2) zu 0 bis 75, vorzugsweise 0 bis 65, und insbesondere 0 bis 50 Mol.% aus einer in dem inerten Kohlenwasserstoff löslichen Aluminiumverbindung der Formel

$$R^5-Al-R^6$$
$$\overset{|}{R^7}$$

worin stehen:
$R^5$ sowie
$R^6$ für einen $C_1$- bis $C_{12}$-Kohlenwasserstoffrest, vorzugsweise eine $C_1$- bis $C_{12}$-, und insbesondere eine $C_2$- bis $C_8$-Alkylgruppe und
$R^7$ für einen $C_1$- bis $C_{12}$-Kohlenwasserstoffrest oder Chlor, vorzugsweise eine $C_1$- bis $C_{12}$-Alkylgruppe oder Chlor, und insbesondere eine $C_2$- bis $C_8$-Alkylgruppe oder Chlor,
mit den Maßgaben, daß (i) die Summe der Mol.% unter (1.2.2.1) und (1.2.2.2) 100 beträgt und (ii) das Atomverhältnis Titan in dem festphasigen Zwischenprodukt (IV) zu Aluminium in der Aluminiumkomponente (V) im Bereich von 1:1 bis 1:50, insbesondere 1:10 bis 1:40, liegt, miteinander in Berührung bringt unter Bildung einer Dispersion, wobei das dabei als Dispergiertes resultierende festphasige Produkt (VI) die Titan enthaltende Katalysatorkomponente (1) ist.

Polymerisationsverfahren dieser Art sind bekannt, wobei im gegebenen Zusammenhang als repräsentativ das in der GB-PS 1 601 418 und - insbesondere - der EP-OS 0 174 620 beschriebene gelten kann.

Die genannte Verfahrensart hat - ebenso wie in Parallele zu setzende vergleichbare andere Verfahrensarten - zum Kernstück eine in besonderer Weise ausgestaltete Titan enthaltende Katalysatorkomponente (1).

Die bekannten Katalysatorkomponenten (1) der betroffenen Verfahrensart erlauben es, Polymerisate herzustellen, die geringe in n-Heptan oder Xylol lösliche Polymeranteile aufweisen, wodurch z.B. die Klebneigung von Folien aus diesen Polymerisaten zurückgedrängt werden kann. Als nachteilig erweisen sich aber noch die morphologischen Eigenschaften der Polymerisate, insbesondere für die technische Beherrschbarkeit des Gasphasenverfahrens in der Wirbelschicht z.B. der erhöhte Feinstkornanfall bei der Polymerisation, der zu Verstopfungen der Kreisgassysteme führt und Abscheideeinrichtungen, wie Zyklone oder Filter, notwendig macht; von erheblichem Nachteil ist auch die niedrige Polymerschüttdichte sowie die Veränderung der Korngröße, der Kornverteilung und/oder der Kornform bei Variation der Polymerdichte und/oder des Meltindexes des Polymerisates.

Hieraus ergibt sich die Aufgabenstellung, die zu der vorliegenden Erfindung geführt hat, nämlich eine neue Art Titan enthaltender Katalysatorkomponente (1) aufzuzeigen, die die erwähnten Nachteile in erheblich vermindertem Maß oder nicht mehr mit sich bringt.

Es wurde gefunden, daß die gestellte Aufgabe gelöst werden kann, wenn man bei dem eingangs definierten Polymerisationsverfahren ein Ziegler-Katalysatorsystem einsetzt, dessen Titan enthaltende Katalystorkomponente (1) eine solche ist, bei deren Herstellung man in Stufe (1.1) unter (1.1.2) eine Lösung (II) verwendet hat, die (IIa) als organisches, Sauerstoff enthaltendes Lösungsmittel ein Keton aufweist und zusätzlich enthält (IId) eine niedermolekular-polymere Verbindung einer spezifischen Art.

Gegenstand der vorliegenden Erfindung ist dementsprechend ein Verfahren zum Herstellen von Homopolymerisaten des Ethylens sowie insbesondere Copolymerisaten des Ethylens mit untergeordneten Mengen an $C_3$- bis $C_8$-, insbesondere $C_4$- bis $C_6$-alpha-Monoolefinen durch Polymerisation des bzw. der Monomeren bei Temperaturen von 30 bis 200, insbesondere 50 bis 100°C, und Drücken von 1 bis 200, insbesondere 5 bis 60 bar, mittels eines Ziegler-Katalysatorsystems aus

(1) einer Titan enthaltenden Katalysatorkomponente und
(2) einer Aluminium enthaltenden Katalysatorkomponente der Formel

$$AlR_3,$$

worin steht
R für einen $C_1$- bis $C_{12}$-Kohlenwasserstoffrest, vorzugsweise eine $C_1$- bis $C_{12}$- und insbesondere eine $C_2$- bis $C_8$-Alkylgruppe,

mit den Maßgaben, daß (i) das Atomverhältnis Titan aus der Katalysatorkomponente (1) : Aluminium aus der Katalysatorkomponente (2) im Bereich von 1:5 bis 1:700, insbesondere 1:10 bis 1:500, liegt und (ii) als Titan enthaltende Katalysatorkomponente (1) eingesetzt wird das festphasige Produkt (VI), das erhalten worden ist, indem man

(1.1) zunächst
(1.1.1) einen feinteiligen, porösen, anorganisch-oxidischen Stoff (I), der einen Teilchendurchmesser von 1 bis 1.000, insbesondere 10 bis 400 µm, ein Porenvolumen von 0,3 bis 3, insbesondere 1 bis 2,5 $cm^3/g$ sowie eine Oberfläche von 100 bis 1.000, insbesondere 200 bis 400 $m^2/g$ besitzt und die Formel $SiO_2.aAl_2O_3$ - worin a steht für eine Zahl im Bereich von 0 bis 2, insbesondere 0 bis 0,5 - hat, und
(1.1.2) eine Lösung (II), wie sie sich ergibt beim Zusammenbringen von
(IIa) 100 Gew.-Teilen eines organischen, Sauerstoff enthaltenden Lösungsmittels,

(IIb) 0,01 bis 6, insbesondere 0,04 bis 3,5 Gew.-Teilen (gerechnet als Titan) eines Titantrichlorids der Formel $TiCl_3.nAlCl_3$ - worin n steht für eine Zahl im Bereich von 0 bis 0,5, vorzugsweise 0,2 bis 0,4, und insbesondere 0,31 bis 0,35 -, sowie

(IIc) 0,01 bis 4, insbesondere 0,04 bis 2,5 Gew.-Teilen (gerechnet als Magnesium) Magnesiumchlorid ($MgCl_2$),

miteinander in Berührung bringt unter Bildung einer Dispersion (III), mit der Maßgabe, daß das Gewichtsverhältnis anorganisch-oxidischer Stoff (I) : Titan in dem Titantrichlorid (IIb) im Bereich von 1:0,01 bis 1:0,2 und das Gewichtsverhältnis anorganisch-oxidischer Stoff (I) : Magnesium in dem Magnesiumchlorid (IIc) im Bereich von 1:0,01 bis 1:0,25 liegt, die Dispersion (III) bei einer Temperatur, die unterhalb von 200, insbesondere unterhalb von 160°C, und oberhalb des Schmelzpunktes des verwendeten organischen, Sauerstoff enthaltenden Lösungsmittels (IIa) liegt, bis zur trockenen Konsistenz - Bildung eines festphasigen Zwischenproduktes (IV) - eindampft und

(1.2) dann

(1.2.1) das aus Stufe (1.1) erhaltene festphasige Zwischenprodukt (IV) und

(1.2.2) eine in einem inerten Kohlenwasserstoff gelöste Aluminiumkomponente (V), die besteht

(1.2.2.1) zu 25 bis 100, vorzugsweise 35 bis 100, und insbesondere 50 bis 100 Mol.% aus einer in dem inerten Kohlenwasserstoff löslichen Komplexverbindung der Summenformel

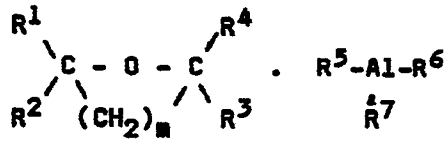

worin stehen:

m für die Zahl 2, 3, oder 4; insbesondere die Zahl 2,

$R^1$ sowie

$R^2$ sowie

$R^3$ sowie

$R^4$ für eine $C_1$- bis $C_3$-Alkylgruppe oder Wasserstoff, vorzugsweise eine Methylgruppe oder Wasserstoff, und insbesondere Wasserstoff,

$R^5$ sowie

$R^6$ für einen $C_1$- bis $C_{12}$-Kohlenwasserstoffrest, vorzugsweise eine $C_1$- bis $C_{12}$-, und insbesondere eine $C_2$- bis $C_8$-Alkylgruppe und

$R^7$ für einen $C_1$- bis $C_{12}$-Kohlenwasserstoffrest oder Chlor, vorzugsweise eine $C_1$- bis $C_{12}$-Alkylgruppe oder Chlor, und insbesondere eine $C_2$- bis $C_8$-Alkylgruppe oder Chlor,

sowie

(1.2.2.2) zu 0 bis 75, vorzugsweise 0 bis 65, und insbesondere 0 bis 50 Mol.% aus einer in dem inerten Kohlenwasserstoff löslichen Aluminiumverbindung der Formel

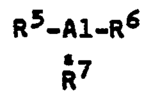

worin stehen:

$R^5$ sowie

$R^6$ für einen $C_1$- bis $C_{12}$-Kohlenwasserstoffrest, vorzugsweise eine $C_1$- bis $C_{12}$-, und insbesondere eine $C_2$- bis $C_8$- Alkylgruppe und

$R^7$ für einen $C_1$- bis $C_{12}$-Kohlenwasserstoffrest oder Chlor, vorzugsweise eine $C_1$- bis $C_{12}$-Alkylgruppe oder Chlor, und insbesondere eine $C_2$- bis $C_8$-Alkylgruppe oder Chlor,

mit den Maßgaben, daß (i) die Summe der Mol.% unter (1.2.2.1) und (1.2.2.2) 100 beträgt und (ii) das Atomverhältnis Titan in dem festphasigen Zwischenprodukt (IV) zu Aluminium in der Aluminiumkomponente (V) im Bereich von 1:1 bis 1:50, insbesondere 1:10 bis 1:40, liegt, miteinander in Berührung bri ngt unter Bildung einer Dispersion, wobei das dabei als Dispergiertes resultierende festphasige Produkt (VI) die Titan enthaltende Katalysatorkomponente (1) ist.

Das erfindungsgem Verfahren ist dadurch gekennzeichnet, daß eine Titan enthaltende Katalysatorkomponente (1) ein etzt wird, bei deren Herstellung man in Stufe (1.1) unter (1.1.2) eine Lösung (II) verwendet hat, die

(IIa) als organisches, Sauerstoff enthaltendes Lösungsmittel ein Keton der Formel

$R^8$-CO-$R^9$,

worin stehen

$R^8$ sowie

$R^9$ für einen gesättigten $C_1$- bis $C_8$-Kohlenwasserstoffrest, vorzugsweise einen gesättigten $C_1$- bis $C_6$-Kohlenwasserstoffrest, und insbesondere eine $C_1$-bis $C_4$-Alkylgruppe
aufweist, und die zusätzlich enthält
(IId) 0,01 bis 10, insbesondere 0,1 bis 5 Gewichtsteile einer niedermolekular-polymeren, eine Viskosität von $10^{-3}$ bis $10^3$, insbesondere 1 bis $10^2$ Pas aufweisenden Verbindung der wiederkehrenden Struktureinheit

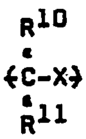

worin stehen
$R^{10}$ sowie
$R^{11}$ für Wasserstoff oder einen gesättigten $C_1$- bis $C_8$-Kohlenwasserstoffrest, vorzugsweise Wasserstoff oder einen gesättigten $C_1$- bis $C_6$-Kohlenwasserstoffrest, und insbesondere Wasserstoff oder eine $C_1$- bis $C_4$-Alkylgruppe, und
X für Sauerstoff oder eine Methylengruppe, vorzugsweise für eine Methylengruppe.

Beim Einsatz der erfindungsgemäß erhaltenen Titan enthaltenden Katalysatorkomponente (1) kann das Polymerisationsverfahren als solches in praktisch allen einschlägig üblichen technologischen Ausgestaltungen durchgeführt werden, etwa als diskontinuierliches, taktweises oder - insbesondere - kontinuierliches Verfahren, sei es z.B. als Suspensions-Polymerisationsverfahren oder - insbesondere - Trockenphasen-Polymerisationsverfahren im gerührten oder - insbesondere - gewirbelten Bett. Die erwähnten technologischen Ausgestaltungen - mit anderen Worten: die technologischen Varianten der Polymerisation von Olefinen nach Ziegler -sind aus der Literatur und Praxis wohlbekannt, so daß sich nähere Ausführungen zu ihnen erübrigen. Zu bemerken ist allenfalls noch, daß die neue Titan enthaltende Katalysatorkomponente (1) - wie entsprechende bekannte Katalysatorkomponenten - z.B. außerhalb oder innerhalb des Polymerisationsgefäßes mit der Katalysatorkomponente (2) zusammengebracht werden kann; im letztgenannten Fall etwa durch räumlich getrennten Eintrag der Komponenten, die im übrigen in Form einer Suspension (Katalysatorkomponente (1)) bzw. Lösung (Katalysatorkomponente (2)) gehandhabt werden können.

Zu der neuen Titan enthaltenden Katalysatorkomponente (1) selbst ist das Folgende zu sagen:

Ihre Herstellung erfolgt in zwei Stufen, die oben sowie nachstehend mit (1.1) und (1.2) bezeichnet sind.

In Stufe (1.1) bringt man einen feinteiligen anorganisch-oxidischen Stoff (I) der oben definierten Art und eine bestimmte, oben definierte Lösung (II) miteinander in Berührung, wobei sich eine Dispersion (III) bildet, die bis zur trockenen Konsistenz - Bildung eines festphasigen Zwischenprodukts (IV) - eingedampft wird. In Stufe (1.2) wird letzteres mit einer Lösung einer bestimmten, oben definierten Aluminiumkomponente (V) in Berührung gebracht unter neuerlicher Bildung einer Dispersion; wobei das dabei als Dispergiertes resultierende festphasige Produkt (VI) die neue Katalysatorkomponente (1) ist.

Im einzelnen kann man dabei wie folgt verfahren:

Stufe (1.1)

Der anorganisch-oxidische Stoff (I) wird als Substanz oder in einem Keton dispergiert (zweckmäßigerweise einem Keton wie es unter (IIa) definiert ist und mit einem Feststoffgehalt der Dispersion von nicht weniger als 5 Gew.%) mit der Lösung (II) vereinigt. Es ist günstig, nach der Vereinigung das Ganze während einer Zeitspanne von 5 bis 120, insbesondere 20 bis 90 Minuten auf einer Temperatur von 10 bis 160, insbesondere 20 bis 120°C zu halten und erst danach die g ebildete Dispersion (III) einzudampfen.

Das Herstellen der Lösung (II) selbst kann so erfolgen, wie man üblicherweise Lösungen herstellt und ist insoweit nicht mit Besonderheiten verbunden. Als zweckmäßig hat sich erwiesen, die Lösung (II) herzustellen durch Vereinigung einer Lösung aus dem Keton (IIa) und dem Titantrihalogenid (IIb) mit einer Lösung aus dem Keton (IIa) und dem Magnesiumchlorid (IIc) sowie einer Lösung aus dem Keton (IIa) und der niedermolekular-polymeren Verbindung (IId). Arbeitstechnisch besonders vorteilhaft ist die Herstellung der Lösung (II), indem man (IIb), (IIc) sowie (IId) in dem Keton (IIa) gemeinsam löst.

Als abschließende Maßnahme bei Stufe (1.1) wird die Dispersion (III) bis zur trockenen Konsistenz eingedampft, wobei das festphasige Zwischenprodukt (IV) erhalten wird. Hierbei kann man - unter Einhaltung der oben gegebenen Temperaturbedingungen - so verfahren, wie man üblicherweise Dispersionen schonend eindampft. Dies bedeutet, daß es im allgemeinen zweckmäßig ist, das Eindampfen unter mehr oder minder stark erniedrigtem Druck oder in einem inerten Gasstrom, etwa einem Stickstoff- oder Argonstrom, vorzunehmen. Als Faustregel gilt, daß man das Paar Temperatur/Druck oder Menge und Temperatur des Gasstromes so wählen sollte, daß beim Eindampfvorgang die Temperatur der Dispersion nicht unter 40°C sinkt. Zweckmäßig ist es auch, das Eindampfen unter steter Wahrung der Homogenität des behandelten Gutes vorzunehmen; - wofür sich z.B. Rotationsverdampfer bewährt haben. Eine verbleibende Restmenge an Keton, etwa eine durch Komplexbildung gebundene Menge, ist für das resultierende festphasige Zwischenprodukt (IV) im allgemeinen ohne Schaden.

Stufe (1.2)

Man bereitet zunächst in getrennten Ansätzen eine 1- bis 40-, vorzugsweise etwa 30 gew.%ige Suspension des festphasigen Zwischenprodukts (IV) sowie eine 5- bis 80-, vorzugsweise etwa 35 gew.%ige Lösung der Aluminiumkomponente (V), wobei als Suspensions- bzw. Lösungsmittel inerte Kohlenwasserstoffe, vor allem relative leichtsiedende Alkan-Kohlenwasserstoffe, wie Hexane, Heptane oder Benzine, verwendet werden. Danach vereinigt man die Suspension und die Lösung in solchen Mengenverhältnissen, daß das gewünschte Gewichtsverhältnis erreicht wird. Zur Vereinigung wird man im allgemeinen die Lösung in die Suspension unter Rühren einbringen, denn diese Verfahrensweise ist praktischer als die - ebenfalls mögliche -umgekehrte. Bei - zweckmäßigerweise nicht zu übersteigenden - Arbeits temperaturen von 15 bis 60, insbesondere 25 bis 50°C, ist innerhalb einer Zeitspanne von 60 bis 600, insbesondere 90 bis 400 Minuten, die Bildung des - als Dispergiertes vorliegenden - festphasigen Produktes (VI) erfolgt.

Dieses kann unmittelbar in Form der erhaltenen Dispersion - zweckmäßigerweise nach einer Wäsche durch Digerieren - als Titan enthaltende Katalysatorkomponente (1) verwendet werden. Im allgemeinen günstiger ist es aber, das festphasige Produkt (VI) zu isolieren und dann erst als Katalysatorkomponente (1) einzusetzen; - wobei sich zum Isolieren z.B. der folgende Weg anbietet: Man trennt das Produkt (VI) von der flüssigen Phase mittels Filtration und wäscht es mit reiner Flüssigkeit (etwa der Art, die man auch als Suspensions- bzw. Lösungsmittel verwendet hatte), worauf man es trocknet, etwa in Vakuum.

Sofern die in Stufe (1.2) einzusetzende Aluminiumkomponente (V) nicht nur aus (1.2.2.1) der oben definierten löslichen Komplexverbindung

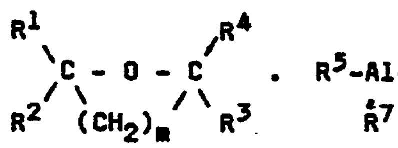

sondern auch zusätzlich (1.2.2.2) der oben definierten löslichen Aluminiumverbindung

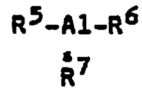

als solcher besteht, kann man das aus Stufe (1.1) erhaltene Zwischenprodukt (IV) mit einer gemeinsamen Lösung der Komplex- sowie der Aluminiumverbindung behandeln oder - was im allgemeinen vorteilhafter ist - nacheinander zunächst mit einer Lösung der Komplexverbindung und dann mit einer Lösung der Aluminiumverbindung.

Die neuen Titan enthaltenden Katalysatorkomponenten (1), d.h. die festphasigen Produkte (VI), lassen sich im Rahmen des eingangs dargelegten Polymerisationsverfahrens zum Herstellen der dort genannten Polymerisate so einsetzen, wie man üblicherweise die Titan enthaltenden Verbindungen bei der Polymerisation von Olefinen nach Ziegler einsetzt. Insoweit sind also keine Besonderheiten gegeben, und es kann auf die aus Literatur und Praxis wohlbekannten Einsatzweisen verwiesen werden. - Es ist lediglich noch zu sagen, daß die neuen Katalysatorkomponenten (1) sich vornehmlich zum Herstellen von Copolymerisaten des Ethylens eignen und daß als Copolymerisationspartner neben Propen und Octen-1 vor allem Buten-1 und Hexen-1 sowie 4-Methylpenten-1 in Betracht kommen. Die Regelung der Molekulargewichte der Polymerisate kann in einschlägig üblicher Weise erfolgen, insbesondere mittels Wasserstoff als Regulans.

Was die stoffliche Seite der neuen Titan enthaltenden Katalysatorkomponenten (1) betrifft, ist im einzelnen noch das Folgende zu sagen:

Der in Stufe (1.1) einzusetzende anorganisch-oxidische Stoff (I) wird im allgemeinen ein Alumosilikat oder - insbesondere - ein Siliciumdioxid sein; wichtig ist, daß der Stoff die geforderten Eigenschaften besitzt und möglichst trocken ist; - wobei die Trocknung physikalisch - etwa durch Erhitzen im Vakuum - oder chemisch - etwa durch Behandeln mit einem Aluminiumalkyl - erfolgt sein kann. Besonders gut geeignete anorganisch-oxidische Stoffe sind solche, die gemäß der ersten Stufe (1) des in der GB-PS 1 550 951 beschriebenen Verfahrens erhalten werden, insbesondere dann, wenn dabei von Hydrogelen ausgegangen wird, die nach dem in der GB-PS 1 368 711 beschriebenen Verfahren erhalten werden.

Die einzusetzenden Ketone (IIa) können z.B. sein: Aceton, Diethylketon, Di-n-propylketon, Di-n-butylketon, Methyl-ethylketon, Methyl-propylketon, Methyl-n-butylketon und n-Butyl-ethylketon. Die Ketone (IIa) können eingesetzt werden in Form von Einzelindividuen sowie Gemischen aus zwei oder mehr Einzelindividuen.

Das einzusetzende Titantrichlorid (IIb) kann ein bei Ziegler-Katalysatorsystemen übliches sein, z.b. ein bei der Reduktion von Titantetrachlorid mittels Wasserstoff, Aluminium oder aluminiumorganischen Verbindungen erhaltenes Reaktionsprodukt. Als besonders gut geeignet haben sich erwiesen Trichloride der Formel $TiCl_3$, wie sie bei der Reduktion von Titantetrachlorid mittels Wasserstoff anfallen sowie Trichloride der Formel

$$TiCl_3 \cdot \frac{1}{3} AlCl_3,$$

wie sie bei der Reduktion von Titantetrachlorid mittels metallischem Aluminium anfallen. Die Titantrichloride können eingesetzt werden in Form von Einzelindividuen sowie Gemischen aus zwei oder mehr Einzelindividuen.

Die ebenfalls in Stufe (1.1) einzusetzende Magnesiumverbindung (IIc) ist Magnesiumchlorid ($MgCl_2$).

Die schließlich in Stufe (1.1) auch noch einzusetzenden niedermolekular-polymeren Verbindungen (IId) können z.B. sein: Polyethylenwachs, Polybuten, Polyisobuten, Polyhexen, statistisches Polypropylen, Polyvinylether, Polystyrol und Polytetrahydrofuran. Die niedermolekular-polymeren Verbindungen (IId) können eingesetzt werden in Form von Einzelindividuen sowie Gemischen aus zwei oder mehr Einzelindividuen.

Die in Stufe (1.2) einzusetzende Aluminiumkomponente (V) besteht

(1.2.2.1) zu 25 bis 100, vorzugsweise 35 bis 100, und insbesondere 50 bis 100 Mol.% aus einer in dem inerten Kohlenwasserstoff löslichen Komplexverbindung der Summenformel

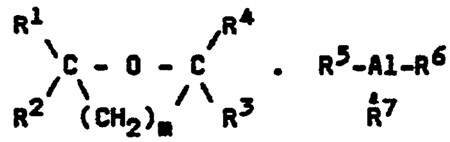

worin stehen:

m für die Zahl 2, 3, oder 4; insbesondere die Zahl 2,

$R^1$ sowie

$R^2$ sowie

$R^3$ sowie

$R^4$ für eine $C_1$- bis $C_3$-Alkylgruppe oder Wasserstoff, vorzugsweise eine Methylgruppe oder Wasserstoff, und insbesondere Wasserstoff,

$R^5$ sowie

$R^6$ für einen $C_1$- bis $C_{12}$-Kohlenwasserstoffrest, vorzugsweise eine $C_1$- bis $C_{12}$-, und insbesondere eine $C_2$- bis $C_8$-Alkylgruppe und

$R^7$ für einen $C_1$- bis $C_{12}$-Kohlen wasserstoffrest oder Chlor, vorzugsweise eine $C_1$- bis $C_{12}$-Alkylgruppe oder Chlor, und insbesondere eine $C_2$- bis $C_8$-Alkylgruppe oder Chlor,

sowie

(1.2.2.2) zu 0 bis 75, vorzugsweise 0 bis 65, und insbesondere 0 bis 50 Mol.% aus einer in dem inerten Kohlenwasserstoff löslichen Aluminiumverbindung der Formel

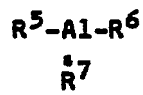

worin stehen:

$R^5$ sowie

$R^6$ für einen $C_1$- bis $C_{12}$-Kohlenwasserstoffrest, vorzugsweise eine $C_1$- bis $C_{12}$-, und insbesondere eine $C_2$- bis $C_8$-Alkylgruppe und

$R^7$ für einen $C_1$- bis $C_{12}$-Kohlenwasserstoffrest oder Chlor, vorzugsweise eine $C_1$- bis $C_{12}$-Alkylgruppe oder Chlor, und insbesondere eine $C_2$- bis $C_8$-Alkylgruppe oder Chlor,

mit der Maßgabe, daß die Summe der Mol.% unter (1.2.2.1) und (1.2.2.2) 100 beträgt.

Bei den Komplexverbindungen unter (1.2.2.1) eignen sich die folgenden Aufbaupartner:

(i) Seitens des Oxacycloalkan-Teils vor allem Tetrahydrofuran, ferner auch Tetrahydropyran und Oxepan sowie 3-Methyl-tetrahydrofuran, 2,5-Dimethyl-tetrahydrofuran, 2,2,5,5-Tetramethyl-tetrahydrofuran, 2-Methyl-tetrahydropyran und 2,6-Dimethyl-tetrahydropyran.

Die Oxacycloalkane können vorliegen in Form von Einzelindividuen sowie Gemischen aus zwei oder den drei Einzelindividuen.

(ii) Seitens des aluminiumorganischen Teils z.B. vor allem Diethylaluminiumchlorid sowie auch Triethylaluminium, Triisobutylaluminium, Tri-n-hexylaluminium und Tri-n-octylaluminium.
Auch diese Aufbaupartner können vorliegen in Form von Einzelindividuen sowie Gemischen aus zwei oder mehr Einzelindividuen.

Für die Aluminiumverbindungen unter (1.2.2.2) gilt das nämliche wie vorstehend unter (ii) zum aluminiumorganischen Teil der Komplexverbindungen Gesagte.

Die Komplexverbindungen als solche sind ihrer Art nach bekannt; eine gut geeignete Methode zu ihrer Herstellung ist z.B. gegeben durch E.B. Baker und H.H. Sisler in Am.Soc. 75, 4828 (1953).

Als Aluminium enthaltende Komponente (2) des erfindungsgemäß einzusetzenden Ziegler-Katalyatorsystems kommen die einschlägig üblichen, der oben gegebenen Formel gehorchenden in Betracht; sie sind aus Literatur und Praxis so wohlbekannt, daß auf sie nicht näher eingegangen zu werden braucht. Als herausragende Vertreter seien beispielsweise geannt Triethylaluminium, Tri-isobutylaluminium, Tri-n-butylaluminium, Tri-n-hexylaluminium und Tri-n-octylaluminium.

Abschließend ist noch zu bemerken, daß die erfindungsgemäßen Titan enthaltenden Katalysatorkomponenten (1), d.h. die Produkte (VI) empfindlich gegen hydrolytische sowie oxidative Einflüsse sind. Insoweit sollte man beim Umgang mit diesen Substanzen also die für Ziegler-Katalysatoren einschlägig üblichen Vorsichtsmaßnahmen treffen (z.B. Feuchtigkeitsausschluß, Inertgasatmosphäre).

Beispiel

Herstellen der Titan enthaltenden Katalysatorkomponente (1)

(1.1.) Zunächst verfährt man in einer ersten Stufe so, daß man
(1.1.1) einen feinteiligen, porösen, anorganisch-oxidischen Stoff (I), der einen Teilchendurchmesser von 20 bis 45 µm, ein Porenvolumen von 1,7 $cm^3/g$ sowie eine Oberfläche von 300 $m^2/g$ besitzt und die Formel $SiO_2$ hat, und
(1.1.2) eine Lösung (II), wie sie sich ergibt beim Zusammenbringen von
(IIa) 100 Gew.-Teilen Aceton,
(IIb) 0,24 Gew.-Teilen (gerechnet als Titan) eines Titantrichlorids der Formel $TiCl_3.nAlCl_3$ - worin n steht für die Zahl 0,33 -,
(IIc) 0,45 Gew.-Teilen (gerechnet als Magnesium) Magnesiumchlorid ($MgCl_2$) sowie
(IId) 2 Gew.-Teilen einer niedermolekular-polymeren, eine Viskosität von 30 Pas aufweisenden Verbindung (Polyisobutylen) der wiederkehrenden Struktureinheit

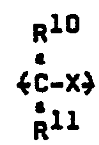

worin stehen
$R^{10}$ sowie
$R^{11}$ für eine Methylgruppe und
X für eine Methylengruppe
unter Rühren über eine Stunde bei einer Temperatur von 40 °C miteinander in Berührung bringt unter Bildung einer Dispersion (III), mit der Maßgabe, daß das Gewichtsverhältnis anorganisch-oxidischer Stoff (I) : Titan in dem Titantrichlorid (IIb) 1:0,012 und das Gewichtsverhältnis anorganisch-oxidischer Stoff (I) : Magnesium in dem Magnesiumchlorid (IIc) 1:0,022 beträgt, und die Dispersion (III) mittels eines Stickstoffstroms bei einer Betriebstemperatur von 70°C bis zur trockenen Konsistenz - Bildung eines festphasigen Zwischenproduktes (IV) - eindampft.

Dieses Zwischenprodukt (IV) enthält 0,9 Gew.% Titan.
(1.2) Dann verfährt man in einer zweiten Stufe so, daß man
(1.2.1) 100 Gew.-Teile des aus Stufe (1.1) erhaltenen festphasigen Zwischenprodukts (IV) und
(1.2.2) eine in 280 Gew.-Teilen n-Heptan gelöste Aluminiumkomponente (V), die besteht
(1.2.2.1) zu 50 Mol.% aus einer (in dem n-Heptan löslichen) Komplexverbindung der Summenformel

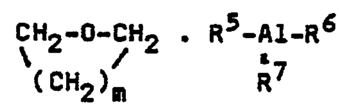

worin stehen:
m für die Zahl 2,
$R^5$ sowie
$R^6$ für einen Ethylrest und
$R^7$ für Chlor,
sowie
(1.2.2.2) zu 50 Mol.% aus einer (in dem n-Heptan löslichen) Aluminiumverbindung der Formel

$$\begin{array}{c} R^5-\mathrm{Al}-R^6 \\ | \\ R^7 \end{array}$$

worin stehen
$R^5$ sowie
$R^6$ für einen Ethylrest und
$R^7$ für Chlor,
unter Rühren über zwei Stunden bei einer Temperatur von 50°C - mit der Maßgabe, daß das Atomverhältnis Titan in dem festphasigen Zwischenprodukt (IV) zu Aluminium in der Aluminiumkomponente (V) 1:26 betruagt - miteinander in Berührung bringt unter Bildung einer Dispersion, wobei das dabei als Dispergiertes resultierende festphasige Produkt (VI) die Titan enthaltende Katalysatorkomponente (1) ist.

Letztere wird durch Absaugen isoliert, mehrmals mit n-Heptan gewaschen und getrocknet; sie enthält 0,6 Gew.% Titan und 12,6 Gew.% Chlor.

Polymerisation mittels der vorstehend beschriebenen Katalysatorkomponente (1)

Die Polymerisation wird kontinuierlich durchgeführt in einem zylindrischen Wirbelbett-Reaktor, der einen Durchmesser von 50 cm hat und während der Polymerisation im kontinuierlich-stationären Zustand mit 160 kg eines kleinteiligen Polymerisats als Polymerisationsmedium gefüllt ist.

Im einzelnen ist das Polymerisationsverfahren derart ausgestaltet, daß

(a) das Polymerisationsmedium ein Wirbelbett aus kleinteiligem Polymerisat ist, mit den Maßgaben, daß
($a_1$) die Verwirbelung des Polymerisationsmediums mit einem aufwärts gerichtetem Gasstrom erfolgt, dessen Geschwindigkeit 35 cm/s beträgt;
($a_2$) im Polymerisationsmedium die Abfuhr der Polymerisationswärme im wesentlichen durch den zur Aufrechterhaltung des Wirbelbetts erforderlichen Gasstrom erfolgt;
(b) die durch Polymerisation verbrauchten Monomeren sowie der zur Regelung der molaren Masse des Polymeren eingesetzte Wasserstoff kontinuierlich ergänzt werden;
(c) die gewählten Bedingungen wie Druck, Temperatur und Gaszusammensetzung konstant gehalten werden;
(d) die Polymerisation bei einem Gesamtdruck von 20 bar bei 85°C sowie den Verhältnissen $H_2$:Ethen von 0,15:1 und Buten-1:Ethen von 0,4:1 durchgeführt wird.

Unter diesen Bedingungen wird mittels intermittierender Zugabe von 6,7 g/Stunde der oben beschriebenen Katalysatorkomponente (1) sowie 5,8 g/Stunde Triisobutylaluminium als Katalysatorkomponente (2) (= einem Atomverhältnis von Ti:A1 von 1:3) Ethen mit Buten-1 copolymerisiert.

Nähere Angaben zum dabei erhaltenen Polymerisat finden sich in der untenstehenden Tabelle.

Vergleichsversuch 1

Herstellen der Titan enthaltenden Katalysatorkomponente (1)

Es wird wie in Beispiel 1 gearbeitet mit den zwei einzigen Ausnahmen, daß in der ersten Stufe (1.1) unter (1.1.2) bei der Lösung (II) (i) als organisches, Sauerstoff enthaltendes Lösungsmittel (IIa) Methanol eingesetzt wird und (ii ) die Mitverwendung der niedermolekular-polymeren Verbindung (IId) entfällt.

Die so gewonnene Katalysatorkomponente enthält 1,5 Gew.-Teile Titan und 19,5 Gew.-Teile Chlor.

Polymerisation mittels der vorstehend beschriebenen Katalysatorkomponente (1)

Die Polymerisation erfolgt wie im Beispiel, jedoch unter Ersatz der dort beschriebenen Katalysatorkomponente (1) durch die gleiche Menge (gerechnet als Titan) der hier beschriebenen Katalysatorkomponente (1).

Zum Ergebnis siehe ebenfalls die nachstehende Tabelle.

Vergleichsversuch 2

Herstellen der Titan enthaltenden Katalysatorkomponente (1)

Sie erfolgt gemäß der EP-OS 0 004 647, Beispiel 1, mit der Maßgabe, daß (i) der gleiche anorganisch-oxidische Stoff (I) eingesetzt wird wie beim oben beschriebenen erfindungsgemäßen Beispiel und (ii) daß als Lösungsmittel nicht Tetrahydrofuran sondern Aceton verwendet wird.
Die dabei erhaltene Katalysatorkomponente enthält 0,8 Gew.% Titan und 5,9 Gew.% Chlor.

Polymerisation mittels der vorstehend beschriebenen Katalysatorkomponente (1)

Die Polymerisation erfolgt wie im Beispiel, jedoch unter Ersatz der dort beschriebenen Katalysatorkomponente (1) durch die gleiche Menge (gerechnet als Titan) der hier beschriebenen Katalysatorkomponente (1).
Zum Ergebnis siehe wiederum die nachstehende Tabelle.

**Tabelle**

| | Produktivität[1)] | Schüttdichte[2)] | Schmelzindex[3)] | Dichte[4)] | lösl. Anteile[5)] | Feingut[6)] |
|---|---|---|---|---|---|---|
| **Beispiel** | $8{,}6 \cdot 10^5$ | 420 | 1,0 | 0,919 | 0,1 | <0,05 |
| **Vgl. Vers. 1** | $8{,}7 \cdot 10^5$ | 240 | 1,0 | 0,920 | 0,7 | >30 |
| **Vgl. Vers. 2** | $3{,}9 \cdot 10^5$ | 330 | 1,0 | 0,919 | 2,5 | 10–15 |

**1) in g Polymerisat pro g Titan in der Katalysatorkomponente (1)**
**2) in g/cm³ nach DIN 53 468**
**3) MFI 190/2,16 in g/10 min nach DIN 53 735**
**4) in g/cm³ nach DIN 53 479**
**5) in % des Polymerisats bei 1 g Polymerisat in 5 g n-Heptan bei 20°C innerhalb von 2 Stunden**
**6) Anteil des bei der Polymerisation aus dem Reaktor ausgetragenen Feingutes (kleiner 0,1 mm) in g/kg Polymerisat-h**

**Patentansprüche**

Verfahren zum Herstellen von Homopolymerisaten des Ethylens sowie Copolymerisaten des Ethylens mit untergeordneten Mengen an $C_3$- bis $C_8$-alpha-Monoolefinen durch Polymerisation des bzw. der Monomeren bei Temperaturen von 30 bis 200°C, und Drücken von 1 bis 200 bar, mittels eines Ziegler-Katalysatorsystems aus
(1) einer Titan enthaltenden Katalysatorkomponente und
(2) einer Aluminium enthaltenden Katalysatorkomponente der Formel
$AlR_3$,
worin steht
R für einen $C_1$- bis $C_{12}$-Kohlenwasserstoffrest
mit den Maßgaben, daß (i) das Atomverhältnis Titan aus der Katalysatorkomponente (1) : Aluminium aus der Katalysatorkomponente (2) im Bereich von 1:5 bis 1:700 liegt und (ii) als Titan enthaltende Katalysatorkomponente (1) eingesetzt wird das festphasige Produkt (VI), das erhalten worden ist, indem man
(1.1) zunächst
(1.1.1) einen feinteiligen, porösen, anorganisch-oxidischen Stoff (I), der einen Teilchendurchmesser von 1 bis 1.000 µm, ein Porenvolumen vo 0,3 bis 3 cm³/g sowie eine Oberfläche von 100 bis 1.000 m²/g besitzt und die Formel $SiO_2.aAl_2O_3$ - worin a steht für eine Zahl im Bereich von 0 bis 2 - hat, und
(1.1.2) eine Lösung (II), wie sie sich ergibt beim Zusammenbringen von
(IIa) 100 Gew.-Teilen eines organischen, Sauerstoff enthaltenden Lösungsmittels,
(IIb) 0,01 bis 6 Gew.-Teilen (gerechnet als Titan) eines Titantrichlorids der Formel $TiCl_3.nAlCl_3$ - worin n steht für eine Zahl im Bereich von 0 bis 0,5 -, sowie
(IIc) 0,01 bis 4 Gew.-Teilen (gerechnet als Magnesium) Magnesiumchlorid ($MgCl_2$),
miteinander in Berührung bringt unter Bildung einer Dispersion (III), mit der Maßgabe, daß das Gewichtsverhältnis anorganisch-oxidischer Stoff (I) : Titan in dem Titantrichlorid (IIb) im Bereich von 1:0,01 bis 1:0,2 und das Gewichtsverhältnis anorganisch-oxidischer Stoff (I) : Magnesium in dem Magnesiumchlorid (IIc) im Bereich von 1:0,01 bis 1:0,25 liegt, die Dispersion (III) bei einer Temperatur, die unterhalb von 200°C, und oberhalb des Schmelzpunktes des verwendeten organischen, Sauerstoff enthaltenden Lösungsmittels (IIa) liegt, bis zur trockenen Konsistenz - Bildung eines festphasigen Zwischenproduktes (IV) - eindampft und

(1.2) dann
(1.2.1) das aus Stufe (1.1) erhaltene festphasige Zwischenprodukt (IV) und
(1.2.2) eine in einem inerten Kohlenwasserstoff gelöste Aluminiumkomponente (V), die besteht
(1.2.2.1) zu 25 bis 100 Mol.% aus einer in dem inerten Kohlenwasserstoff löslichen Komplexverbindung der Summenformel

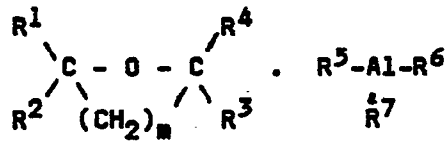

worin stehen:
m für die Zahl 2, 3, oder 4,
$R^1$ sowie
$R^2$ sowie
$R^3$ sowie
$R^4$ für eine $C_1$- bis $C_3$-Alkylgruppe oder Wasserstoff
$R^5$sowie
$R^6$ für einen $C_1$- bis $C_{12}$-Kohlenwasserstoffrest und
$R^7$ für einen $C_1$- bis $C_{12}$-Kohlenwasserstoffrest oder Chlor
sowie
(1.2.2.2) zu 0 bis 75 Mol.% aus einer in dem inerten Kohlenwasserstoff löslichen Aluminiumverbindung der Fomel

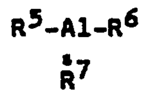

worin stehen:
$R^5$ sowie
$R^6$ für einen $C_1$- bis $C_{12}$-Kohlenwasserstoffrest und
$R^7$ für einen $C_1$- bis $C_{12}$-Kohlenwasserstoffrest oder Chlor,
mit den Maßgaben, daß (i) die Summe der Mol.% unter (1.2.2.1) und (1.2.2.2) 100 beträgt und (ii) das Atomverhältnis Titan in dem festphasigen Zwischenprodukt (IV) zu Aluminium in der Aluminiumkomponente (V) im Bereich von 1:1 bis 1:50 liegt, miteinander in Berührung bringt unter Bildung einer Dispersion, wobei das dabei als Dispergiertes resultierende festphasige Produkt (VI) die Titan enthaltende Katalysatorkomponente (1) ist,
dadurch gekennzeichnet, daß eine Titan enthaltende Katalysatorkomponente (1) eingesetzt wird, bei deren Herstellung man in Stufe (1.1) unter (1.1.2) eine Lösung (II) verwendet hat, die
(IIa) als organisches, Sauerstoff enthaltendes Lösungsmittel ein Keton der Formel
$R^8$-CO-$R^9$,
worin stehen
$R^8$ sowie
$R^9$ für einen gesättigten $C_1$- bis $C_8$-Kohlenwasserstoffrest,
aufweist, und die zusätzlich enthält
(IId) 0,01 bis 10 Gewichtsteile einer niedermolekular-polymeren, eine Viskosität von $10^{-3}$ bis $10^3$ Pas aufweisenden Verbindung der wiederkehrenden Struktureinheit

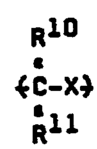

worin stehen
$R^{10}$ sowie
$R^{11}$ für Wasserstoff oder einen gesättigten $C_1$-bis $C_8$-Kohlenwasserstoffrest,
X für Sauerstoff oder eine Methylengruppe.

## Claims

A process for the preparation of homopolymers and copolymers of ethylene with minor amounts of $C_3$–$C_8$-alphamonoolefins, by polymerization of the monomer or monomers at from 30 to 200°C and under from 1 to 200 bar by means of a Ziegler catalyst system consisting of (1) a titanium-containing catalyst component and (2) an aluminum-containing catalyst component of the formula
$AlR_3$,
where R is a $C_1$–$C_{12}$-hydrocarbon radical, with the provisos that (i) the atomic ratio of titanium in the catalyst component (1) to aluminum from the catalyst component (2) is from 1:5 to 1:700, and (ii) the titanium-containing catalyst component (1) employed is the solid-phase product (VI) which is obtained when

(1.1) first

(1.1.1) a finely divided, porous, inorganic oxide substance (I) which has a particle diameter of from 1 to 1000 µm, a pore volume of from 0.3 to 3 $cm^3/g$ and a surface area of from 100 to 1000 $m^2/g$ and is of the formula $SiO_2 \cdot aAl_2O_3$, where a is from 0 to 2, and

(1.1.2) a solution (II) as obtained by combining

(IIa) 100 parts by weight of an organic oxygen-containing solvent,

(IIb) from 0·01 to 6 parts by weight (calculated as titanium) of a titanium trichloride of the formula $TiCl_3 \cdot nAlCl_3$, where n is from 0 to 0.5, and

(IIc) from 0.01 to 4 parts by weight (calculated as magnesium) of magnesium chloride ($MgCl_2$), are brought into contact with one another with formation of a dispersion (III), with the proviso that the weight ratio of inorganic oxide substance (I) to titanium in the titanium trichloride (IIb) is from 1:0.01 to 1:0.2 and the weight ratio of inorganic oxide substance (I) to magnesium in the magnesium chloride (IIc) is from 1:0.01 to 1:0.25, the dispersion (III) is evaporated to dryness at below 200°C and above the melting point of the organic oxygen-containing solvent (IIa) used, with formation of a solid-phase intermediate (IV), and

(1.2) then

(1.2.1) the solid-phase intermediate (IV) obtained from stage (1.1) and

(1.2.2) an aluminum component (V) which is dissolved in an inert hydrocarbon and consists of

(1.2.2.1) from 25 to 100 mol% of a complex which is soluble in the inert hydrocarbon and is of the empirical formula

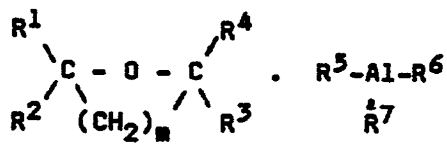

where m is 2, 3 or 4, $R^1$, $R^2$, $R^3$ and $R^4$ are each $C_1$–$C_3$-alkyl or hydrogen, $R^5$ and $R^6$ are each a $C_1$–$C_{12}$-hydrocarbon radical and $R^7$ is a $C_1$–$C_{12}$-hydrocarbon radical or chlorine, and

(1.2.2.2) from 0 to 75 mol% of an aluminum compound which is soluble in the inert hydrocarbon and is of the formula

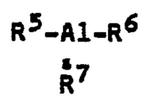

where $R^5$ and $R^6$ are each a $C_1$–$C_{12}$-hydrocarbon radical, and $R^7$ is a $C_1$–$C_{12}$-hydrocarbon radical or chlorine are brought into contact with one another with formation of a dispersion, with the provisos that (i) the sum of the molar percentages under (1.2.2.1) and (1.2.2.2) is 100 and (ii) the atomic ratio of titanium in the solid-phase intermediate (IV) to aluminum in the aluminum component (V) is from 1:1 to 1:50, the resulting dispersed solid-phase product (VI) being the titanium-containing catalyst component (1), wherein the titanium-containing catalyst component (1) employed is prepared using, in stage (1.1) under (1.1.2), a solution (II) which contains

(IIa) a ketone of the formula
$R^8$–CO–$R^9$
where $R^8$ and $R^9$ are each a saturated $C_1$–$C_8$-hydrocarbon radical, as the organic oxygen-containing solvent, and additionally contains

(IId) from 0.01 to 10 parts by weight of a low molecular weight polymeric compound which has a viscosity of from $10^{-3}$ to $10^3$ Pas and has repeating structural units

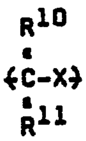

where $R^{10}$ and $R^{11}$ are each hydrogen or a saturated $C_1$–$C_8$-hydrocarbon radical and X is oxygen or methylene.

**Revendications**

Procédé de préparation d'homopolymères de l'éthylène, ainsi que de copolymères de l'éthylène avec de faibles quantités d'α-monooléfines en $C_3$ à $C_8$, par polymérisation du ou des monomères à des températures de 30 à 200°C et sous des pressions de 1 à 200 bars, à l'aide d'un système catalyseur de Ziegler se composant de (1) un composant de catalyseur contenant du titane et (2) un composant de catalyseur contenant de l'aluminium, de formule

$AlR_3$

dans laquelle R est mis pour un reste hydrocarboné en $C_1$ à $C_{12}$, étant spécifié que (i) la rapport atomique du titane du composant de catalyseur (1) à l'aluminium du composant de catalyseur (2) se situe dans la gamme de 1:5 à 1:700 et (ii) on utilise, comme composant de catalyseur contenant du titane, le produit en phase solide (VI) que l'on a obtenu

(1.1) en mettant tout d'abord en contact mutuel, avec formation d' une dispersion (III),

(1.1.1) une substance de la nature d'un oxyde inorganique, poreuse et finement divisée, qui a un diamètre de particules de 1 à 1000 μm, un volume de pores de 0,3 à 3 $cm^3/g$, ainsi qu'une surface de 100 à 1000 $m^2/g$ et qui répond à la formule

$SiO_2 \cdot aAl_2O_3$ – dans laquelle a est mis pour un nombre compris entre 0 et 2 – et

(1.1.2) une solution (II) obtenue en mélangeant

(IIa)100 parties en poids d'un solvant organique contenant de l'oxygène,

(IIb) 0,01 à 6 parties en poids (calculées en tant que titane) d'un trichlorure de titane de formule $TiCl_3 \cdot nAlCl_3$ – dans laquelle n est mis pour un nombre compris entre 0 et 0,5 – ainsi que

(IIc) 0,01 à 4 parties en poids (calculées en tant que magnésium) de chlorure de magnésium ($MgCl_2$),

étant spécifié que le rapport en poids de la substance de la nature d'un oxyde inorganique (I) au titane contenu dans le trichlorure de titane (IIb) se situe dans la gamme de 1:0,01 à 1:0,2 et que le rapport en poids de la substance de la nature d'un oxyde inorganique (I) au magnésium contenu dans le chlolure de magnésium (IIc) se situe dans la gamme de 1:0,01 à 1:0,25, et en évaporant jusqu' a la consistance sèche la dispersion (III) à une température qui se situe au-dessous de 200°C et au-dessus du point de fusion du solvant organique contenant de l'oxygène (IIa) utilisé – formation d'un produit intermédiaire en phase solide (IV) –

(1.2) puis en mettant en contact mutuel, avec formation d'une dispersion,

(1.2.1) le produit intermédiaire en phase solide (IV) obtenu dans l'étape (1.1) et

(1.2.2) un composant à base d'aluminium (V) qui est dissous dans un hydrocarbure inerte et qui se compose

(1.2.2.1) pour 25 à 100% en moles d'un composé complexe soluble dans l'hydrocarbure inerte et répondant à la formule brute

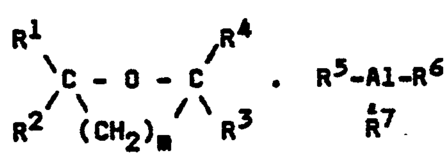

dans laquelle m est mis pour le nombre 2, 3 ou 4, $R^1$ ainsi que $R^2$ ainsi que $R^3$ ainsi que $R^4$ sont mis chacun pour un groupement alkyle en $C_1$ à $C_3$ ou pour un atome d'hydrogène, $R^5$ ainsi que $R^6$ sont mis chacun pour un reste hydrocarbure en $C_1$ à $C_{12}$ et $R^7$ est mis pour un reste hydrocarbure en $C_1$ à $C_{12}$ ou pour un atome de chlore, ainsi que

(1.2.2.2) pour 0 à 75% en moles d'un composé de l'aluminium soluble dans l'hydrocarbure inerte et répondant à la formule

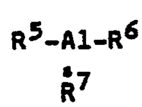

dans laquelle $R^5$ ainsi que $R^6$ sont mis chacun pour reste hydrocarbure en $C_1$ à $C_{12}$ et $R^7$ est mis pour un

reste hydrocarbure en $C_1$ à $C_{12}$ ou pour un atome de chlore, étant spécifié que (i) la somme des pourcentages en moles mentionnés en (1.2.2.1) et en (1.2.2.2) s' élève à 100 et (ii) le rapport atomique du titane dans le produit intermédiaire en phase solide (IV) à l'aluminium dans le composant à base d'aluminium (V) se situe dans la gamme de 1:1 à 1:50, le produit en phase solide (VI) ainsi obtenu sous forme de produit en dispersion étant le composant de catalyseur contenant du titane (1), caractérisé en ce qu'on utilise un composant de catalyseur contenant du titane (1) pour la préparation duquel on a utilisé en (1.1.2) dans l'etape (1.1) une solution (II) qui présente

(IIa) en tant que solvant organique contenant de l'oxygène, une cétone de formule
$R^8$–CO–$R^9$
dans laquelle $R^8$ ainsi que $R^9$ sont mis chacun pour un reste hydrocarbure saturé en $C_1$ à $C_8$ et qui contient en plus,

(IId) 0,01 à 10 parties en poids d'un composé polymère de bas poids moléculaire, présentant une viscosité de $10^{-3}$ à $10^3$ Pas et contenant l'unité structurelle répétitive

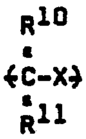

dans laquelle $R^{10}$ ainsi que $R^{11}$ sont mis chacun pour un atome d'hydrogène ou un reste hydrocarbure saturé en $C_1$ à $C_8$ X est mis pour un atome d'oxygène ou un groupement méthylène.